# FASCICULE DE BREVET EUROPEEN

(11) **EP 2 527 717 B1**
(45) Date de publication et mention de la délivrance du brevet: **12.06.2013**
(21) Numéro de dépôt: 12354023.9
(22) Date de dépôt: 28.03.2012
(51) Int. Cl.: F21L 4/00, H01M 2/10

(54) **Dispositif d'alimentation électrique d'une lampe portative**
Vorrichtung zur elektrischen Stromversorgung einer tragbaren Lampe
Power supply device of a portable lamp

(30) Priorité: 26.05.2011 FR 1101630
(43) Date de publication de la demande: 28.11.2012
(73) Titulaire: Zedel, 38920 Crolles (FR)
(72) Inventeur: Bouffay, Boris, 38660 Saint Bernard du Touvet (FR); Berrel, Philippe, 38580 La Chapelle de Bard (FR)
(74) Mandataire: Hecké, Gérard

(56) Documents cités:
- US-A1- 2002 060 550
- US-A1- 2004 038 088
- US-A1- 2004 081 884

## Description

### Domaine technique de l'invention

L'invention se rapporte au domaine des lampes électriques portatives, dont les lampes dites « frontales » qui se portent au niveau du front de manière à éclairer vers l'avant, en pouvant par exemple s'ajuster sur un casque. Plus précisément, l'invention est relative à un dispositif d'alimentation électrique d'une lampe portative, du genre comprenant une enveloppe, ainsi que des connexions électriques de raccordement, dans un circuit d'alimentation, de l'une, au choix, de deux sources interchangeables d'énergie électrique que sont un accumulateur et un jeu d'au moins deux piles. Dans le dispositif d'alimentation électrique du genre considéré ici, les connexions électriques comportent un contact de raccordement d'une borne d'une des piles à une borne de l'autre pile, tandis que l'enveloppe délimite un logement d'accueil soit des piles ensemble soit de l'accumulateur.

### État de la technique

Une lampe électrique portative est classiquement pourvue d'une ou plusieurs sources lumineuses qui sont généralement choisies parmi les LEDs ou les ampoules et qui sont alimentées par une source d'énergie électrique. Cette source d'énergie électrique comporte des moyens de stockage d'énergie qui peuvent présenter la forme d'une ou plusieurs piles ou celle d'un ou plusieurs accumulateurs rechargeables ou batteries.

Une pile possède des dimensions extérieures standardisées qui la rendent à la fois interchangeable avec une autre du même type et adaptable à de nombreux appareils différents. Du fait de sa large diffusion, une pile est souvent disponible dans de nombreux commerces et un approvisionnement en piles est généralement aisé, même dans des régions isolées et/ou sauvages qui sont justement des zones privilégiées d'emploi de lampes portatives.

Un accumulateur rechargeable ou batterie présente d'autres avantages que les piles. En particulier, un accumulateur rechargeable peut conférer une plus grande autonomie, en fournissant une alimentation électrique pendant une durée plus conséquente.

Des lampes portatives ont été conçues pour pouvoir être alimentées de deux manières alternatives et complémentaires, plus précisément par pile(s) ou par accumulateur(s). L'emploi de telles lampes permet de cumuler des avantages de l'alimentation par pile(s) et des avantages de l'alimentation par accumulateur(s).

En outre, un avantage particulier procuré par une lampe portative à alimentation par pile(s) ou par accumulateur consiste à pouvoir mettre en oeuvre une stratégie dans laquelle on choisit prioritairement l'alimentation par accumulateur et, en cas de panne ou de décharge complète de l'accumulateur, on utilise des piles en remplacement, comme alimentation de secours et/ou comme recharges normales. Une telle stratégie suppose d'emporter avec soi des piles de rechange, qui présentent généralement les avantages d'être moins lourdes, moins volumineuses et moins coûteuses qu'un accumulateur rechargeable.

Toutefois, une difficulté à résoudre est que la pile n'a pas le même format que l'accumulateur, ni la même façon de se connecter dans la lampe.

Dans la demande de brevet français FR-2 941 032, il est décrit un dispositif d'alimentation par accumulateur ou piles d'une lampe. Ce dispositif comprend un boîtier avant et un boîtier arrière, qui peut être articulé à ce boîtier avant, dans une configuration d'alimentation par piles, et qui peut alors être placé en position fermée de manière à pouvoir retenir des piles en place dans des alvéoles. Dans une configuration d'alimentation par accumulateur, les deux boîtiers avant et arrière sont séparés l'un de l'autre par un bloc accumulateur inséré entre eux. Ce bloc accumulateur est pourvu de moyens d'assemblage complémentaires de ceux du boîtier avant et de ceux du boîtier arrière. Chacune de ses faces avant et arrière est en outre configurée pour s'adapter hermétiquement sur l'un des boîtiers avant et arrière.

Dans la demande de brevet français FR-2 650 123, il est décrit un boîtier pour piles électriques cylindriques de différents diamètres. Ce boîtier comprend des entretoises basculantes, qui peuvent être rabattues contre le fond du boîtier. Lorsque ces entretoises sont rabattues, des piles de grand diamètre peuvent être installées et connectées dans le boîtier. Lorsqu'elles sont relevées, les entretoises peuvent rehausser des piles de petit diamètre, de manière que celles-ci soient connectées dans le boîtier comme les piles de grand diamètre. La solution proposée dans cette demande de brevet français FR-2 650 123 est adaptée dans le cas de piles de diamètres différents mais de même longueur, mais il reste un besoin de solution dans les autres cas.

Dans la demande de brevet US-2002/0060550 des Etats-Unis d'Amérique, il est décrit un dispositif d'alimentation qui est du genre précité et dont une même cavité pourvue de bornes de connexion peut recevoir soit trois piles, soit un accumulateur rechargeable.

### Objet de l'invention

L'invention a au moins pour but de rendre possible une réduction du coût d'un dispositif prévu pour alimenter électriquement une lampe portative en permettant un choix quant au type d'alimentation, parmi une alimentation par pile(s) et une alimentation par accumulateur(s).

Selon l'invention, ce but est atteint grâce à un dispositif d'alimentation qui est du genre précité et dans lequel le contact comporte une pince déformable entre une première configuration, dans laquelle chacune de deux branches en regard constitutive de cette pince est positionnée pour connecter l'une desdites bornes en pénétrant dans un volume de réception de l'accumulateur, et une deuxième configuration, dans laquelle les deux branches sont placées hors dudit volume de réception laissé libre entre ces deux branches.

Outre l'atteinte du but précité, l'invention peut permettre l'obtention d'un ou plusieurs avantages additionnels, parmi lesquels il y a un moindre encombrement, une simplification, un usage facilité, une robustesse accrue et une plus grande fiabilité d'usage.

De préférence, des moyens de calage des deux piles dans le logement sont en plusieurs parties. Préférentiellement, chaque branche définit une borne de connexion d'une pile, ainsi qu'une partie de ces moyens de calage.

Avantageusement, parmi les parties des moyens de calage, au moins la partie définie par l'une des branches présente la forme d'une portion de support d'une extrémité d'un corps d'une des piles devant la borne de connexion définie par cette branche.

De préférence, la pince forme une pince de préhension de l'accumulateur.

Préférentiellement, chaque branche comporte l'une de deux rampes d'un convergent de guidage de l'accumulateur vers un espace entre les deux branches lors d'une mise en place de cet accumulateur dans ledit volume de réception.

Avantageusement, le contact est rappelé élastiquement vers sa première configuration en étant déformable élastiquement de cette première configuration à sa deuxième configuration.

De préférence, le dispositif d'alimentation électrique comporte des butées d'arrêt aptes à empêcher les branches de se rapprocher l'une de l'autre au delà de la deuxième configuration.

Avantageusement, les deux branches du contact s'étendent de part et d'autre d'un axe longitudinal du logement, sensiblement depuis une première extrémité du logement qui comporte une deuxième extrémité à l'opposé de cette première extrémité. Préférentiellement, chaque branche comporte une extrémité libre entre les première et deuxième extrémités du logement.

De préférence, l'extrémité libre de chaque branche définit une borne de connexion d'une des piles.

Avantageusement, le logement comporte une longueur selon laquelle s'étend une ouverture d'accès latéral à ce logement, auquel cas l'enveloppe comporte un couvercle de fermeture de cette ouverture latérale. Préférentiellement, les deux branches délimitent entre elles un espace ayant globalement la forme d'une fente qui débouche latéralement vers l'ouverture d'accès au logement.

De préférence, le contact comporte une embase de montage qui relie les deux branches l'une à l'autre.

Avantageusement, chaque branche comporte une aile de retenue à un fond du logement et de guidage de cette branche en rapprochement-éloignement par rapport à l'autre branche. Cette aile de retenue et de guidage est engagée derrière une portion du fond, de manière à être retenue dans la direction opposée à ce fond et à pouvoir coulisser parallèlement à un mouvement de rapprochement-éloignement relatif des deux branches. De préférence, les ailes de retenue et de guidage forment en outre des butées pour stopper le rapprochement des deux branches l'une vers l'autre à une valeur minimale d'écartement. Cette valeur minimale est avantageusement choisie pour que l'engagement de l'accumulateur entre les deux branches demeure une opération aisée.

Préférentiellement, le contact est réalisé dans un flan métallique mis en forme.

Avantageusement, chaque branche est percée d'un symbole indiquant la polarité de la borne que définit cette branche.

De préférence, le contact est une pièce d'un seul tenant. Il peut également comporter plusieurs pièces raccordées électriquement.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue en plan d'un boîtier d'alimentation électrique conforme à l'invention et représente celui-ci dans un état ouvert, où un couvercle et le reste de ce boîtier sont dissociés ;
- la figure 2 est une vue en perspective d'un contact constitutif du boîtier représenté à la figure 1 ;
- la figure 3 est une vue en perspective où le boîtier de la figure 1 est représenté sans son couvercle ;
- la figure 4 est une vue analogue à la figure 1 et représente le boîtier de cette figure 1 sans son couvercle, ainsi qu'un accumulateur installé dans ce boîtier ; et
- la figure 5 est également une vue analogue à la figure 1 et représente le boîtier de cette figure 1 sans son couvercle, ainsi qu'une paire de piles installées et connectées dans ce boîtier, pour un fonctionnement alternatif à celui considéré à la figure 4.

### Description d'un mode préférentiel de l'invention

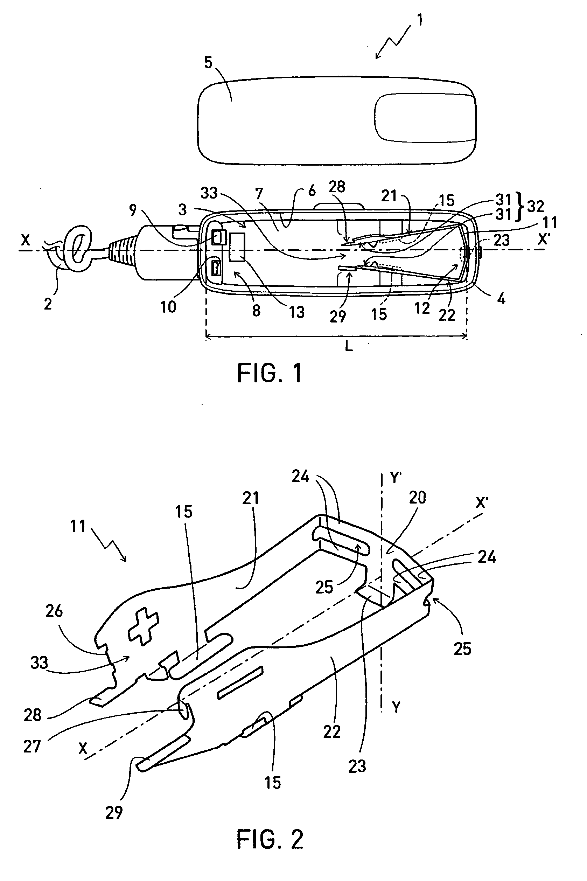

Sur la figure 1 est représenté un boîtier portatif 1 d'alimentation électrique d'une lampe portative, connue en soi et non représentée, qui est plus spécialement une lampe frontale distincte de ce boîtier 1 dans une application préférée, tout en pouvant également être une lampe électrique portative d'un autre type, par exemple une lampe de poche.

Le raccordement à la lampe à alimenter électriquement se fait au moyen d'un cordon électrique 2, dont seulement une extrémité branchée au boîtier 1 est représentée à la figure 1.

Le boîtier 1 comporte une enveloppe en deux parties dissociables l'une de l'autre et complémentaires, dont chacune délimite partiellement un logement interne 3 et qui sont un corps 4 et un couvercle 5 de fermeture d'une ouverture 6 d'accès latéral à ce logement 3. Un fond rapporté 7 constitutif du boîtier 1 est monté dans le corps 4, du côté opposé à l'ouverture 6.

Le boîtier 1 et le logement 3 sont allongés selon un même axe longitudinal X-X'. L'ouverture 6 s'étend sensiblement sur toute la longueur L du logement 3.

A une extrémité 8 du logement 3, le corps 4 possède deux contacts ou pôles 9 et 10 de polarités opposées, qui sont décalés transversalement l'un de l'autre en étant disposés de part et d'autre de l'axe longitudinal X-X'. Chaque pôle 9 ou 10 est prévu pour la connexion d'une borne d'une pile standard et fait partie de connexions électriques de raccordement de l'une, au choix, de deux sources interchangeables d'énergie électrique, dans un circuit d'alimentation de la lampe portative. Ces connexions comprennent des raccordements qui relient les pôles 9 et 10 à deux fils conducteurs du cordons 2, d'une manière connue en soi, et qui sont masqués par le fond 7. Les connexions électriques comportent également un contact 11.

Se trouvant dans le logement 3, le contact 11 est destiné à raccorder deux piles, d'une manière qui est précisée plus loin. Il est fixé dans le corps 4, au fond 7, au niveau de l'extrémité 12 du logement 3, c'est-à-dire à l'opposé de l'extrémité 8.

D'autres moyens de connexion équipant le boîtier 1 présentent fa forme d'une prise femelle 13 pour le branchement d'un accumulateur amovible. Comme les pôles 9 et 10, cette prise 13 est électriquement reliée aux deux fils conducteurs du cordon 2, d'une manière connue en soi.

Sur la figure 2, le contact 11 est représenté seul. Il est réalisé dans un flan métallique d'acier à ressort, mis en forme par pliages successifs de manière à comporter une embase intermédiaire de montage 20 globalement transversale et deux branches latérales 21 et 22. Ces dernières s'étendent en regard l'une de l'autre, de part et d'autre de l'axe longitudinal X-X', à partir de l'embase 20.

Pour sa retenue par accrochage au fond 7, l'embase 20 est pourvue d'une languette 23 en saillie selon une direction parallèle à l'axe X-X', vers l'extrémité 8 du logement 3.

De chaque côté de cette languette 23, l'embase 20 forme l'une de deux lames élastiquement flexibles 24 symétriques, dont chacune porte l'une des deux branches 21 et 22, à son extrémité distale, et qui sont des lames de rappel élastique de ces branches 21 et 22 l'une vers l'autre. Chaque lame 24 est percée d'une fente 25 de réduction de sa raideur en flexion.

Chaque branche 21 ou 22 est globalement rectiligne et s'étend sensiblement à angle droit à partir d'une lame 24. Les deux lames 24 sont inclinées vers l'intérieur du logement 3, de plusieurs degrés autour d'un axe transversal Y-Y', par rapport au plan transversal contenant cet axe. De la sorte, les branches 21 et 22 sont inclinées l'une vers l'autre, de manière à se rapprocher l'une de l'autre, et de l'axe longitudinal X-X', au fur et à mesure qu'elles s'éloignent de l'embase 20.

Chaque branche 21 ou 22 est pourvue d'une aile 15 de retenue au fond 7. Les deux ailes 15 sont en saillies dans un même plan, l'une vers l'autre. Une fois en position opérationnelle, elles pénètrent derrière le fond 7 de manière à y être accrochées tout en pouvant coulisser en rapprochement-éloignement relatif et ainsi accompagner un basculement des branches 21 et 22 l'une par rapport à l'autre, autour de l'axe Y-Y'.

Les bases des ailes 15 forment en outre des butées pour stopper le rapprochement des deux branches 21 et 22 l'une vers l'autre, à une valeur minimale d'écartement. Cette valeur minimale est avantageusement choisie pour que l'engagement de l'accumulateur A entre les deux branches 21 et 22 demeure une opération aisée.

A l'opposé de l'embase 20, chaque branche 21 ou 22 possède une extrémité libre qui forme une borne 26 ou 27 de connexion d'une borne d'une pile, en regard d'un des pôles 9 et 10, ainsi qu'un doigt 28 ou 29 de support d'une extrémité du corps de la même pile devant cette borne 26 ou 27.

Comme les pôles 9 et 10, les bornes 26 et 27 sont de polarités opposées. La borne 26 définie par la branche 21 est une borne plus, c'est-à-dire de polarité positive, ce que le symbole « + » percé dans cette branche 21 indique de manière nettement visible. La borne 27 définie par la branche 22 est une borne moins, c'est-à-dire de polarité négative, ce que le symbole « - » percé dans cette branche 22 indique de manière nettement visible.

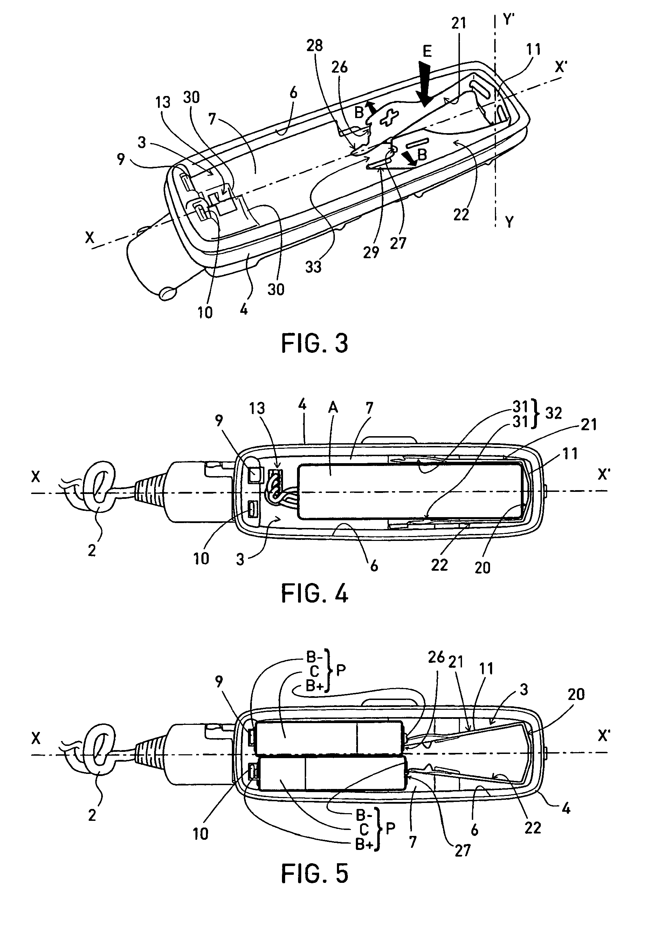

Chacun des doigts 28 et 29 fait partie de moyens de calage d'une pile en position opérationnelle. Une autre partie de ces moyens de calage présente la forme de supports 30 que le fond 7 définit à proximité de l'extrémité 8 du logement 3, ainsi qu'on peut le voir à la figure 3. La paroi interne de ce logement 3 participe également au calage des deux piles ensemble, l'une contre l'autre.

De manière visible à la figure 1, chacune des branches 21 et 22 définit l'une de deux rampes 31 d'un convergent 32 de guidage vers un espace en forme de fente longitudinale 33 entre ces deux branches. Lorsque le contact 11 est en place dans le corps 4, cette fente 33 débouche latéralement vers l'ouverture 6 d'accès au logement 3, ainsi qu'on peut le voir à la figure 3.

Le boîtier 1 est compact, simple et peu coûteux eu égard à ses possibilités multiples de fonctionnement, ce qui est avantageux. Il est en outre robuste.

Sur la figure 3, le couvercle 5 est retiré et une source d'énergie électrique comme un accumulateur ou une paire de piles peut être installée dans le corps 4. D'elles-mêmes, les branches 21 et 22 sont inclinées l'une vers l'autre de manière à pénétrer progressivement dans la partie centrale du logement 3. Ainsi, la borne plus 26 et la borne moins 27 se trouvent respectivement en regard du pôle moins 9 et du pôle plus 10.

Sur la figure 4, un accumulateur amovible A est en place dans le corps 4. Pour l'installer ainsi, on place cet accumulateur A ou batterie rechargeable devant l'ouverture 6, parallèlement à l'axe longitudinal X-X'. Jusqu'à ce stade, les branches 21 et 22 pénètrent dans le volume de réception de l'accumulateur A. Ensuite, on engage un côté de l'accumulateur A contre le convergent 32. Lorsqu'on le pousse alors vers le fond 7, l'accumulateur A s'enfonce entre les branches 21 et 22 comme indiqué par la flèche E à la figure 3, en étant guidé entre elles par les rampes 31 du convergent 32, en même temps qu'il repousse ces branches vers l'extérieur. Toujours sur la figure 3, les flèches B symbolisent le basculement réversible des branches 21 et 22 vers l'extérieur, sous la poussée centrifuge de l'accumulateur A.

Sur la figure 4, les branches 21 et 22 on été précédemment écartées par l'accumulateur A et sont hors du volume de réception de cet accumulateur A. Ayant été basculées moyennant une déformation élastique du contact 11 et notamment de ses lames de rappel 24, les branches 21 et 22 serrent entre elles l'accumulateur A et, ce faisant, forment une pince de préhension qui tient cet accumulateur A en place, ce qui est avantageux.

Toujours sur la figure 4, un bloc mâle de connexion de l'accumulateur A est branché dans la prise femelle 13. Le couvercle 5 peut être remis en place devant l'ouverture 6, après quoi le boîtier 1 refermé est opérationnel comme alimentation électrique d'une lampe.

Lorsque l'on retire l'accumulateur A, le rappel élastique exercé principalement par les lames 24 ramène les branches 21 et 22 dans leur position d'origine, à savoir celle de la figure 3, où les bornes 26 et 27 sont positionnées de manière qu'on peut y connecter des piles remplaçant l'accumulateur A.

En l'absence de l'accumulateur A, la mise en place de deux piles dans le corps 4 s'effectue donc d'une manière classique, sans une quelconque manoeuvre des branches 21 et 22. Le symbole « + » dans la branche 21 indique alors le sens d'installation d'une pile entre le pôle 9 et la borne 26 de polarités opposées. De même, le symbole « - » dans la branche 22 indique le sens d'installation d'une autre pile entre le pôle 10 et la borne 27 de polarités opposées.

Sur la figure 5, deux piles P identiques sont en place, côte-à-côte et tête-bêche, dans le corps 4. Il s'agit de deux piles standard du type de celles qu'on appelle couramment piles « rondes » et dont la borne moins B- et la borne plus B+ se trouvent respectivement à l'une et à l'autre extrémité du corps C de la pile. Les piles P peuvent être rechargeables ou non.

Les corps C des piles P sont calés ensemble, l'un contre l'autre, entre deux parois en regard du boîtier 1. Chacun d'eux repose à la fois sur un doigt 28 ou 29 et sur un support 30. De la sorte, une pile P est connectée au pôle 9 et à la borne 26, tandis que l'autre pile P est connectée au pôle 10 et à la borne 27. Les piles P sont raccordées en série dans un circuit d'alimentation de la lampe portative, dans la mesure où le contact 11 raccorde la borne moins B-de l'une d'elles à la borne plus B+ de l'autre pile P.

Comme l'installation et le retrait de l'accumulateur A, l'installation et le retrait des piles P s'effectuent aisément, ce qui est avantageux.

De plus, l'utilisation du boîtier 1 est d'autant plus fiable qu'un changement du type de source d'énergie électrique ne requiert pas l'usage d'un accessoire indépendant et susceptible d'être égaré.

L'invention ne se limite pas au mode de réalisation décrit précédemment. En particulier, au lieu de présenter la forme d'un boîtier 1 séparé de la lampe à alimenter électriquement, le dispositif d'alimentation électrique conforme à l'invention peut être intégré à cette lampe pour former avec celle-ci un ensemble compact.

## Revendications

1. Dispositif d'alimentation électrique d'une lampe portative, comprenant une enveloppe (4, 5, 7), ainsi que des connexions électriques (9, 10, 11, 13) de raccordement, dans un circuit d'alimentation, de l'une, au choix, de deux sources interchangeables d'énergie électrique que sont un accumulateur (A) et un jeu d'au moins deux piles (P), les connexions électriques comportant un contact (11) de raccordement d'une borne (B-) d'une des piles (P) à une borne (B+) de l'autre pile (P), l'enveloppe délimitant un logement (3) d'accueil soit des piles (P) ensemble soit de l'accumulateur (A), **caractérisé en ce que** ledit contact (11) comporte une pince déformable entre une première configuration, dans laquelle chacune de deux branches en regard (21, 22) constitutive de cette pince est positionnée pour connecter l'une desdites bornes (B-, B+) en pénétrant dans un volume de réception de l'accumulateur (A), et une deuxième configuration, dans laquelle les deux branches (21, 22) sont placées hors dudit volume de réception laissé libre entre ces deux branches (21, 22).

2. Dispositif selon la revendication 1, **caractérisé en ce que** des moyens (5, 7, 28, 29, 30) de calage des deux piles (P) dans le logement sont en plusieurs parties, chaque branche (21, 22) définissant une borne (26, 27) de connexion d'une pile (P), ainsi qu'une partie (28, 29) de ces moyens de calage.

3. Dispositif selon la revendication 2, **caractérisé en ce que**, parmi les parties des moyens de calage (5, 7, 28, 29, 30), au moins la partie définie par l'une des branches (21, 22) présente la forme d'une portion (28, 29) de support d'une extrémité d'un corps (C) d'une des piles (P) devant la borne de connexion (26, 27) définie par cette branche.

4. Dispositif selon l'une quelconque des revendications précédentes, **caractérisé en ce que** la pince forme une pince de préhension de l'accumulateur (A).

5. Dispositif selon l'une quelconque des revendications précédentes, **caractérisé en ce que** chaque branche (21, 22) comporte l'une de deux rampes (31) d'un convergent (32) de guidage vers un espace (33) entre les deux branches (21, 22).

6. Dispositif selon l'une quelconque des revendications précédentes, **caractérisé en ce que** le contact (11) est rappelé élastiquement vers sa première configuration en étant déformable élastiquement de cette première configuration à sa deuxième configuration.

7. Dispositif selon la revendication 6, **caractérisé en ce qu'**il comporte des butées d'arrêt (15) aptes à empêcher les branches de se rapprocher l'une de l'autre au delà de la deuxième configuration.

8. Dispositif selon l'une quelconque des revendications précédentes, **caractérisé en ce que** les deux branches (21, 22) du contact (11) s'étendent de part et d'autre d'un axe longitudinal (X-X') du logement (3), sensiblement depuis une première extrémité (12) de ce logement (3) qui comporte une deuxième extrémité (8) à l'opposé de cette première extrémité (12), chaque branche (21, 22) comportant une extrémité libre (26 et 28, 27 et 29) entre les première et deuxième extrémités (8, 12) du logement (3).

9. Dispositif selon la revendication 8, **caractérisé en ce que** l'extrémité libre de chaque branche (21, 22) définit une borne (26, 27) de connexion d'une des piles (P).

10. Dispositif selon l'une quelconque des revendications précédentes, **caractérisé en ce que** le logement (3) comporte une longueur (L) selon laquelle s'étend une ouverture (6) d'accès latéral à ce logement (3), l'enveloppe comportant un couvercle (5) de fermeture de cette ouverture latérale (6), les deux branches (21, 22) délimitant entre elles un espace ayant globalement la forme d'une fente (33) qui débouche latéralement vers l'ouverture (6) d'accès au logement (3).

11. Dispositif selon l'une quelconque des revendications précédentes, **caractérisé en ce que** le contact (11) comporte une embase de montage (20) qui relie les deux branches (21, 22) l'une à l'autre.

12. Dispositif selon l'une quelconque des revendications précédentes, **caractérisé en ce que** chaque branche (21, 22) comporte une aile (15) de retenue à un fond (7) du logement et de guidage de cette branche (21, 22) en rapprochement-éloignement par rapport à l'autre branche (21, 22), cette aile de retenue et de guidage (15) étant engagée derrière une portion du fond (7), de manière à être retenue dans la direction opposée à ce fond (7) et à pouvoir coulisser parallèlement à un mouvement de rapprochement-éloignement relatif (B) des deux branches (21, 22).

13. Dispositif selon l'une quelconque des revendications précédentes, **caractérisé en ce que** le contact (11) est une pièce d'un seul tenant.

## Patentansprüche

1. Vorrichtung zur elektrischen Versorgung einer tragbaren Lampe, die ein Gehäuse (4, 5, 7) sowie elektrische Anschlüsse (9, 10, 11, 13) zum Anschließen jeweils einer von zwei austauschbaren Stromquellen in einem Speisestromkreis umfasst, die von einem Akku (A) und einem Satz von mindestens zwei Batterien (P) gebildet werden, wobei die elektrischen Anschlüsse einen Kontakt (11) zum Anschluss einer Klemme (B-) einer der Batterien (P) an eine Klemme (B+) der anderen Batterie (P) umfassen und das Gehäuse eine Aufnahme (3) für entweder die Batterien (P) zusammen oder den Akku (A) begrenzt, **dadurch gekennzeichnet, dass** der Kontakt (11) eine verformbare Klammer zwischen einer ersten Konfiguration umfasst, in der jeder von zwei einander gegenüberliegenden Armen (21, 22), die diese Klammer bilden, so positioniert ist, dass er eine der genannten Klemmen (B-, B+) in den Stromkreis schaltet, indem er in einen Aufnahmeraum des Akkus (A) eindringt, und einer zweiten Konfiguration, in der sich die beiden Arme (21, 22) außerhalb des genannten Aufnahmeraums befinden, der zwischen diesen beiden Armen (21, 22) frei gelassen ist.

2. Vorrichtung nach Anspruch 1, **dadurch gekennzeichnet, dass** Vorrichtungen (5, 7, 28, 29, 30) zum Festklemmen der beiden Batterien (P) in dem Aufnahmeraum in mehreren Teilen vorgesehen sind, wobei jeder Arm (21, 22) eine Klemme (26, 27) zum Anschluss einer Batterie (P) und einen Teil (28, 29) dieser Festklemmvorrichtungen bildet.

3. Vorrichtung nach Anspruch 2, **dadurch gekennzeichnet, dass** von den Teilen der Festklemmvorrichtungen (5, 7, 28, 29, 30) mindestens der von einem der Arme (21, 22) gebildete Teil die Form eines Unterstützungsabschnitts (28, 29) eines Endes eines Körpers (C) einer der Batterien (P) vor der von diesem Arm gebildeten Anschlussklemme (26, 27) hat.

4. Vorrichtung nach einem der vorstehenden Ansprüche, **dadurch gekennzeichnet, dass** die Klammer eine Greifklammer für den Akku (A) bildet.

5. Vorrichtung nach einem der vorstehenden Ansprüche, **dadurch gekennzeichnet, dass** jeder Arm (21, 22) die eine der beiden Schrägen (31) einer Führungsschräge (32) zu einem Zwischenraum (33) zwischen den beiden Armen (21, 22) umfasst.

6. Vorrichtung nach einem der vorstehenden Ansprüche, **dadurch gekennzeichnet, dass** der Kontakt (11) elastisch in seine erste Konfiguration zurückgezogen wird, indem er elastisch verformbar aus dieser ersten Konfiguration in seine zweite Konfiguration ist.

7. Vorrichtung nach Anspruch 6, **dadurch gekennzeichnet, dass** sie Stopper (15) aufweist, die geeignet sind, die Arme an einer gegenseitigen Annäherung über die zweite Konfiguration hinaus zu hindern.

8. Vorrichtung nach einem der vorstehenden Ansprüche, **dadurch gekennzeichnet, dass** sich die beiden Arme (21, 22) des Kontakts (11) beidseits einer Längsachse (X-X') der Aufnahme (3) erstrecken, und zwar im Wesentlichen von einem ersten Ende (12) dieser Aufnahme (3), die ein zweites, zu diesem ersten Ende (12) entgegengesetztes Ende (8) (12) umfasst, wobei jeder Arm (21, 22) ein freies Ende (26 und 28, 27 und 29) zwischen dem ersten und zweiten Ende (8, 12) der Aufnahme (3) aufweist.

9. Vorrichtung nach Anspruch 8, **dadurch gekennzeichnet, dass** das freie Ende jedes Arms (21, 22) eine Anschlussklemme (26, 27) zum Anschluss einer der Batterien (P) bildet.

10. Vorrichtung nach einem der vorstehenden Ansprüche, **dadurch gekennzeichnet, dass** die Aufnahme (3) eine Länge (L) aufweist, entlang derer eine Öffnung (6) zum seitlichen Zugang zu dieser Aufnahme (3) verläuft, wobei das Gehäuse einen Deckel (5) zum Verschließen dieser seitlichen Öffnung (6) umfasst, und wobei die beiden Arme (21, 22) zwischeneinander einen Raum begrenzen, der im Wesentlichen die Form eines Schlitzes (33) hat, der seitlich zur Zugangsöffnung (6) zur Aufnahme (3) mündet.

11. Vorrichtung nach einem der vorstehenden Ansprüche, **dadurch gekennzeichnet, dass** der Kontakt (11) ein Montageansatzstück (20) umfasst, das die beiden Arme (21, 22) miteinander verbindet.

12. Vorrichtung nach einem der vorstehenden Ansprüche, **dadurch gekennzeichnet, dass** jeder Arm (21, 22) einen Flügel (15) zum Zurückhalten an einem Boden (7) der Aufnahme und zum Führen dieses Arms (21, 22) zum Annähern und Entfernen bezüglich dem anderen Arm (21, 22) aufweist, welcher Rückhalte- und Führungsflügel (15) hinter einem Bereich des Bodens (7) so eingeführt ist, dass er in zu diesem Boden (7) entgegengesetzter Richtung zurückgehalten wird und parallel zu der relativen Annäherungs- bzw. Entfernungsbewegung (B) der beiden Arme (21, 22) gleiten kann.

13. Vorrichtung nach einem der vorstehenden Ansprüche, **dadurch gekennzeichnet, dass** der Kontakt (11) ein einstückiges Teil ist.

## Claims

1. Device for electric power supply of a portable lamp, comprising an enclosure (4, 5, 7) and electric connections (9, 10, 11, 13) for connection, in a power supply circuit, with either one, as required, of two interchangeable electric power sources that are a storage battery (A) and a set of at least two primary cells (P), the electric connections comprising a contact (11) for connecting a terminal (B-) of one of the primary cells (P) to a terminal (B+) of the other primary cell (P), the enclosure delineating a housing (3) for accommodating either the primary cells (P) together or the storage battery (A), **characterized in that** said contact (11) comprises a clamp deformable between a first configuration in which each one of two facing branches (21, 22) of this clamp is positioned to connect one of said terminals (B-, B+) by penetrating into an accommodating volume of the storage battery (A), and a second configuration in which the two branches (27, 22) are placed outside said accommodating volume left free between these two branches (21, 22).

2. Device according to claim 1, **characterized in that** wedging means (5, 7, 28, 29, 30) for wedging the two primary cells (P) in the housing have several parts, each branch (21, 22) defining a terminal (26, 27) for connecting a primary cell (P), and also a part (28, 29) of these wedging means.

3. Device according to claim 2, **characterized in that**, among the parts of the wedging means (5, 7, 28, 29, 30), at least the part defined by one of the branches (21, 22) has the form of a portion (28, 29) for supporting one end of a body (C) of one of the primary cells (P) in front of the terminal (26, 27) defined by this branch.

4. Device according to any one of the preceding claims, **characterized in that** the clamp forms a gripping means for gripping the storage battery (A).

5. Device according to any one of the preceding claims, **characterized in that** each branch (21, 22) comprises one of two ramps (31) of a convergent arrangement (32) for guiding towards a space (33) between the two branches (21,22).

6. Device according to any one of the preceding claims, **characterized in that** the contact (11) is flexibly biased to its first configuration by being flexibly deformable from this first configuration to its second configuration.

7. Device according to claim 6, **characterized in that** it comprises arresting stops (15) configured to prevent the branches from moving towards one another beyond the second configuration.

8. Device according to any one of the preceding claims, **characterized in that** the two branches (21, 22) of the contact (11) extend on each side of a longitudinal axis (X-X') of the housing (3), substantially from a first end (12) of this housing (3) which comprises a second end (8) opposite this first end (12), each branch (21, 22) comprising a free end (26 and 28, 27 and 29) between the first and second ends (8, 12) of the housing (3).

9. Device according to claim 8, **characterized in that** the free end of each branch (21, 22) defines a terminal (26, 27) for connecting one of the primary cells (P).

10. Device according to any one of the preceding claims, **characterized in that** the housing (3) comprises a length (L) along which there extends an opening (6) for lateral access to this housing (3), the enclosure comprising a cover (5) for closing this lateral opening (6), the two branches (21, 22) delineating between them a space globally having the form of a slot (33) that opens laterally towards the opening (6) giving access to the housing (3).

11. Device according to any one of the preceding claims, **characterized in that** the contact (11) comprises a mounting base (20) which connects the two branches (21, 22) to one another.

12. Device according to any one of the preceding claims, **characterized in that** each branch (21, 22) comprises a retaining and guiding wing (15) for retaining to a bottom (7) of the housing and for guiding this branch (21, 22) in to-and-from movement with respect to the other branch (21, 22), this retaining and guiding wing (15) being engaged behind a portion of the bottom (7) so as to be retained in the opposite direction to this bottom (7) and to be able to slide in parallel manner to a relative movement (B) of the two branches (21, 22) towards or away from one another.

13. Device according to any one of the preceding claims, **characterized in that** the contact (11) is monobloc.
